Europäisches Patentamt

European Patent Office

Office européen des brevets

(19)

(11) Veröffentlichungsnummer: **0 066 671**
B1

(12) # EUROPÄISCHE PATENTSCHRIFT

(45) Veröffentlichungstag der Patentschrift:
06.02.85

(51) Int. Cl.⁴: **C 03 B 9/02**

(21) Anmeldenummer: **82101540.1**

(22) Anmeldetag: **27.02.82**

(54) **Vorrichtung zum Ausblasen von Hohlglaskörpern in einer Form.**

(30) Priorität: **05.06.81 DE 3122400**

(43) Veröffentlichungstag der Anmeldung:
**15.12.82 Patentblatt 82/50**

(45) Bekanntmachung des Hinweises auf die Patenterteilung:
**06.02.85 Patentblatt 85/6**

(84) Benannte Vertragsstaaten:
**FR GB IT SE**

(56) Entgegenhaltungen:
**DE - C - 136 199
DE - C - 242 089
FR - A - 445 741**

(73) Patentinhaber: **J. WALTER CO. MASCHINEN GMBH,
Ziegelwinkel 12, D-8640 Kronach (DE)**

(72) Erfinder: **Liebal, Eberhard, Ziegelwinkel 50a,
D-8640 Kronach (DE)**

(74) Vertreter: **LOUIS, PÖHLAU, LOHRENTZ & SEGETH,
Kesslerplatz 1, D-8500 Nürnberg (DE)**

## Beschreibung

Die Erfindung betrifft eine Vorrichtung zum Ausblasen eines am vorderen Ende einer Glasmacherpfeife hängenden Hohlglaskörperrohlings in einer Form, wobei das hintere Ende der Pfeife von einem oberhalb der Form an einer vertikalen Tragsäule angeordneten Greiferkopf erfasst wird, welcher die Pfeife mit einer Druckluftquelle verbindet und um die vertikale Achse der Pfeife rotierbar ist.

Bei der Herstellung von Hohlglaskörpern, z.B. Vasen, Flaschen, Gläsern od. dgl. im Blasverfahren von Hand, d.h. durch einen Glasmacher, geht man üblicherweise so vor, dass ein erster Glasmacher mit dem vorderen Ende der Glasmacherpfeife eine gewisse Glasmenge aus dem Ofen nimmt und hieraus dann unter ständigem Drehen der Pfeife ein sogenanntes Külbel, d.h. einen verhältnismässig kleinen Hohlkörper bildet. Dieses Külbel wird dann, häufig von einem zweiten Glasmacher, erneut in die Schmelze eingetaucht und ein weiterer Glasposten aufgenommen. Mit diesem Glasposten geht dann der Glasmacher auf das Pfahleisen, wo der Glasposten unter ständigem Blasen, d.h. Vergrösserung seines Volumens, eine gewisse Vorform erhält. Hierzu wird im allgemeinen ein spezielles Werkzeug, das Wulgerholz, verwendet.

Sobald der Glasposten auf diese Weise eingestellt, d.h. vorgeformt ist, wird er — wiederum sehr häufig von einer weiteren Bedienungsperson — in die Form eingebracht. Es handelt sich im allgemeinen um eine mit Wasser gekühlte und angefeuchtete Holzform. Der in der Form befindliche, bereits weitgehend aufgeblasene Hohlkörperrohling wird dann durch entsprechendes Blasen in seine endgültige Form gebracht, d.h. es wird versucht, ihn möglichst eng an die Wandung der Form anzublasen. Wenn der Hohlglaskörper dann seine endgültige Gestalt hat, wird die Form geöffnet und der Hohlglaskörper gekühlt, bevor er von dem vorderen Ende der Pfeife abgesprengt werden kann. Während des Kühlens muss dabei der Hohlglaskörper ständig gleichmässig bewegt werden, um zu verhindern, dass er sich in einer Richtung verzieht. Der abgesprengte Hohlglaskörper kommt dann auf ein Kühlband.

Aus den vorstehenden Ausführungen ergibt sich, dass der Arbeitsgang vom Vorformen bzw. Einstellen des Glaspostens bis zum Absprengen des fertigen Hohlglaskörpers vom vorderen Ende der Pfeife vergleichsweise zeitaufwendig ist. Darüber hinaus erfordert er eine erhebliche Geschicklichkeit des Glasmachers, weil es unbedingt notwendig ist, dass der Hohlglaskörper sauber an die Formwandung angeblasen (ausgeblasen) wird und dass es ausserdem nicht, insbesondere beim Herausnehmen des Hohlglaskörpers aus der Form und während des Abkühlvorganges, infolge Schrägstellung der Pfeife noch zu unerwünschten Verformungen des Hohlglaskörpers kommt.

Ein weiterer Mangel des bekannten Vorgehens ist darin zu sehen, dass zum Ausblasen ein verhältnismässig hoher Luftdruck sehr günstig ist, um zu erreichen, dass der Hohlglaskörper sauber an der Formwandung anliegt. Dieser hohe Druck kann vom Glasmacher natürlich nur mit entsprechendem körperlichen Einsatz, häufig sogar unter Schädigung der Lungen, erzeugt werden.

Aus der DE-C Nr. 242089 ist bereits eine Vorrichtung bekannt, bei der das hintere Ende der Pfeife an eine Druckluftquelle angeschlossen werden kann und die Pfeife während des Ausblasens und Formens des Hohlglaskörpers gedreht wird. Ein derartiges Vorgehen führt zu einer noch einwandfreieren Anlage des Hohlglaskörpers an der Formwandung. Nachteilig ist jedoch, dass bei der bekannten Vorrichtung die Pfeife mit dem Hohlglaskörper lediglich in eine seitliche Entnahmeposition verschwenkt wird. Das Abkühlen des Hohlglaskörpers, welches für dessen endgültige Formgebung von massgeblicher Bedeutung ist, muss nach wie vor in Handarbeit erfolgen, so dass die Mängel des bisher bekannten Vorgehens zu einem Grossteil ebenfalls zu befürchten sind.

Der FR-A Nr. 445741 ist eine Vorrichtung als bekannt zu entnehmen, bei der eine Tragsäule für die Glasmacherpfeife samt Greiferkopf und Pfeife um eine horizontale Achse gekippt werden kann. Der Greiferkopf ist bei dieser Vorrichtung allerdings in Richtung der Pfeifenachse nicht verschiebbar ausgeführt. Ausserdem dient die bekannte Vorrichtung nur zur Herstellung eines Hohlglaskörperrohlings, der an einer anderen Stelle fertiggeblasen werden muss.

Schliesslich ist aus der DE-C Nr. 136199 eine Glasblasmaschine mit vertikaler Blasposition bekannt, bei der die Pfeife während ihrer Drehung, und während ihr Pressluft zugeführt wird, gleichzeitig in vertikaler Richtung verschoben werden kann. Auch hier ist jedoch nicht in hinreichender Weise für eine sorgfältige Abkühlung des Hohlglaskörperrohlings nach seiner Entnahme aus der Vorrichtung gesorgt. Die Abkühlung muss nach wie vor in Handarbeit vorgenommen werden.

Der Erfindung liegt nun die Aufgabe zugrunde, eine Vorrichtung der eingangs erwähnten Art vorzuschlagen, die es gestattet, sämtliche Arbeitsgänge vom Beginn des Ausblasens bis zum Ende der Abkühlung weitgehend zu mechanisieren, so dass die bei reiner Handarbeit nahezu unvermeidlichen Mängel ausgeschaltet werden und die Qualität der Erzeugnisse noch weiter verbessert wird, ohne dass aber die Merkmale von handwerklich gefertigten Hohlglaskörpern verlorengehen. Darüber hinaus soll die Vorrichtung einfach aufgebaut und insbesondere auch leicht zu bedienen sein.

Zur Lösung dieser Aufgabe wird nach der Erfindung bei einer Vorrichtung der eingangs erwähnten Art vorgeschlagen, dass der Greiferkopf zur Einführung des eingestellten Glaspostens vertikal in die Form absenkbar ist, und dass die Tragsäule gemeinsam mit dem Greiferkopf und der in diesem hängenden Pfeife aus der etwa vertikalen Blasposition in eine etwa horizontale Kühlposition kippbar ist.

Bei der Vorrichtung nach der Erfindung wird somit gegenüber der aus der DE-C Nr. 242089 bekannten Vorrichtung nicht nur das Ausblasen mechanisch bewerkstelligt, sondern auch die Entnahme des Formlings aus der Form und dessen Abkühlung. Die Bedienung ist sehr einfach, weil der Glasmacher die Pfeife nach dem Einstellen des Glaspostens lediglich noch in den Greiferkopf einhängt. Anschliessend wird die Pfeife mit dem Hohlglasrohling selbsttätig in Drehung versetzt, in die Form abgesenkt und nach entsprechender Bearbeitung in der Form wieder angehoben. Nach dem Ausheben aus der Form wird die Tragsäule mit dem Greiferkopf und der Pfeife in die horizontale Kühlposition gekippt, in der die Pfeife mit dem fertiggeformten Hohlglaskörper dann während ständiger Drehung abgekühlt wird, bis der Hohlglaskörper entsprechend steif ist, um abgenommen werden zu können. Eine derartige Abkühlung in der horizontalen Position hat den Vorteil, dass kaum mit einem Verziehen des geblasenen Körpers zu rechnen ist, während, wenn eine Abkühlung bei vertikal stehender Pfeife vorgenommen würde, die Gefahr besteht, dass der noch nicht hinreichend abgekühlte Hohlglasrohling übermässig lang gestreckt wird. Es ist also bei Verwendung einer Vorrichtung nach der Erfindung im Gegensatz zu den bisher bekannten Vorrichtungen die Gewähr gegeben, dass tatsächlich die gewünschte, in der Form erzeugte Gestalt erhalten bleibt. Zum Abnehmen des fertig geformten und abgekühlten Hohlglaskörpers wird dann die Tragsäule wieder in die vertikale Blasposition gebracht. Während des gesamten Formvorganges kann hierbei automatisch entsprechende Luft über den Greiferkopf dem hinteren Ende der Pfeife zugeführt werden. Für den Glasmacher ist es also lediglich noch erforderlich, die Pfeife mit dem eingestellten Glasposten in den Greiferkopf einzuhängen. Alle anderen Bewegungen können automatisch ablaufen. Sobald eine entsprechende Abkühlung bewirkt ist, wird dann die Pfeife mit dem fertigen Hohlkörper abgenommen und durch eine neue, einen eingestellten Glasposten tragende Pfeife ersetzt.

Die Bedienung der Vorrichtung gestaltet sich dann besonders einfach, wenn der Greiferkopf eine Spannzange für das hintere Ende der Pfeife aufweist, welche gleichzeitig die Verbindung mit der Druckluftquelle sichert, da in diesem Fall der Glasmacher lediglich noch das hintere Ende der Pfeife in die Spannzange einführt und eine Verriegelung auslöst.

Es ist nach der Erfindung vorgesehen, dass der Greiferkopf einen eigenen Drehantrieb aufweist, um die Bewegungsmöglichkeiten des Greiferkopfes möglichst vielseitig zu gestalten, gleichzeitig aber den Aufbau der Vorrichtung zu vereinfachen.

Die Absenkung des eingestellten Glaspostens bzw. der Pfeife erfolgt in einfacher Weise dadurch, dass der Greiferkopf in Längsrichtung der Tragsäule verschieblich ist, wobei zweckmässig zur Verschiebung des Greiferkopfes ein Stellzylinder dient, dessen Kolbenstange in der unteren Sollstellung des Greiferkopfes, in der sich der eingestellte Glasposten in der Form befindet, mittels einer über verstellbare Anschläge an der Tragsäule angesteuerten Bremse arretierbar ist. Auf diese Weise lässt sich sehr einfach eine unterschiedliche Absenkhöhe einstellen, was ja erforderlich ist, um die Vorrichtung leicht an unterschiedlich grosse Hohlglaskörper anpassen zu können.

Um zu gewährleisten, dass die Glasmacherpfeife mit dem eingestellten Glasposten bzw. dem ausgeblasenen Hohlglaskörper sich stets in der richtigen Position befindet, kann in bevorzugter Weitergestaltung des Erfindungsvorschlages an der Tragsäule unterhalb des Greiferkopfes und im Bereich des unteren Drittels der eingehängten Pfeife ein eine Längsverschiebung und Drehung der Pfeife ermöglichendes, diese bei horizontaler Tragsäule lagerndes Stützglied angeordnet sein. Dieses Stützglied ist zweckmässig einem geläufigen Pfahleisen ähnlich.

Zur Automatisierung der Arbeitsabläufe ist vorgesehen, dass die Tragsäule oberhalb der Form um eine Horizontalachse mittels eines Stellmotors kippbar gelagert ist.

Wenn, wie nach der Erfindung weiter vorgesehen, in Blasposition oberhalb der Form eine zusammen mit der Tragsäule schwenkbare Kühleinrichtung für den entformten Hohlglaskörper vorhanden ist, kann ohne Schwierigkeiten auch eine rasche Kühlung des Hohlglaskörpers bewirkt werden, so dass die Taktzeiten sich wesentlich verkürzen lassen.

In diesem Zusammenhang wird zweckmässig die Kühleinrichtung von der zum Ausblasen des Hohlglaskörpers dienenden Druckluftquelle mit gespeist, was vor allem dann leicht möglich ist, wenn, nach einem weiteren Vorschlag der Erfindung, als Druckluftquelle ein Gebläse mit einem Überdruck von maximal 1000 mm WS (9,8 kPa) dient, von dessen Austrittsluftstrom ein erster Teilluftstrom der Pfeife und ein zweiter Teilluftstrom der Kühleinrichtung zugeführt wird, wobei einer der Teilluftströme mittels eines Ventils od. dgl. drosselbar ist. Über das Ventil, welches vorteilhafterweise in der zur Kühleinrichtung führenden Leitung angeordnet ist, kann eingestellt werden, welcher Anteil der gesamten Gebläseluft zur Kühlung und welcher Anteil zur Formung des Hohlglaskörpers verwendet wird. Im allgemeinen wird man dabei den Luftstrom, der in die Glasmacherpfeife strömt, so hoch einstellen, dass ein zuverlässiges Ausblasen des Glasrohlings in der Form gewährleistet ist. Die überschiessende Luft wird zur Kühlung benutzt.

Weitere Merkmale, Einzelheiten und Vorteile der Erfindung ergeben sich aus der folgenden Beschreibung einer bevorzugten Ausführungsform einer Vorrichtung nach der Erfindung anhand der Zeichnung. In dieser zeigen, jeweils schematisiert,

Fig. 1 eine Seitenansicht der Vorrichtung in einer ersten Position (vor Einführung des eingestellten Glaspostens in die Form),

Fig. 2 eine Ansicht ähnlich Fig. 1 in einer zweiten Position, in der sich der eingestellte Glasposten in der Form befindet, und

Fig. 3 eine Ansicht entsprechend den Fig. 1 und 2, jedoch in der Kühlposition.

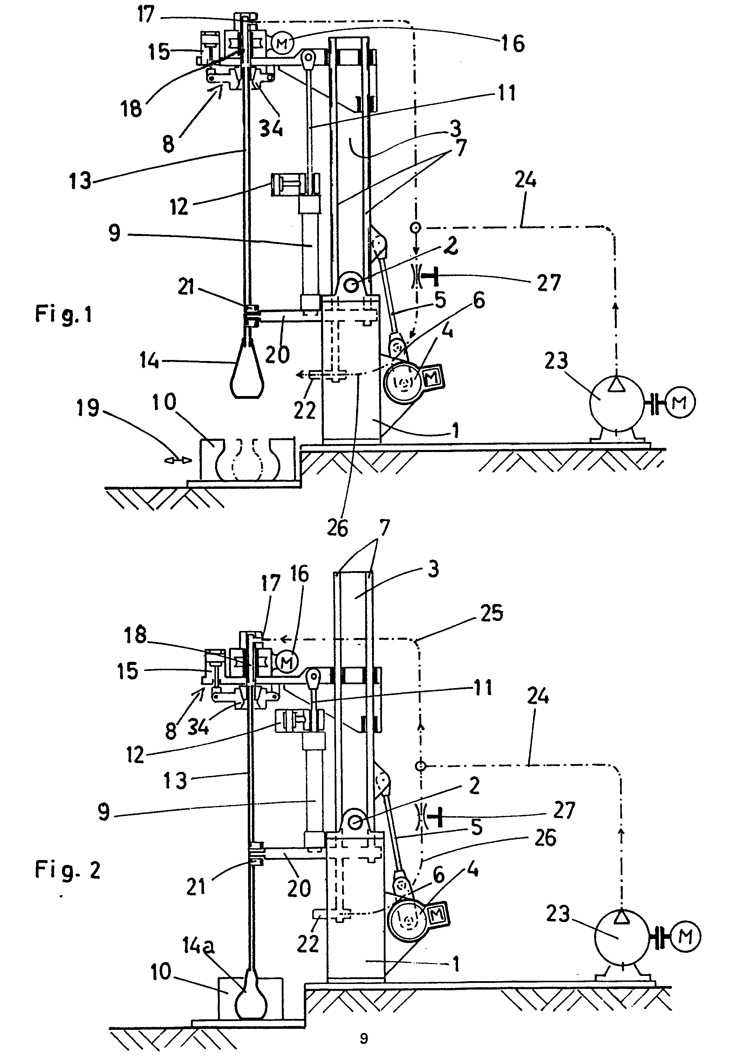

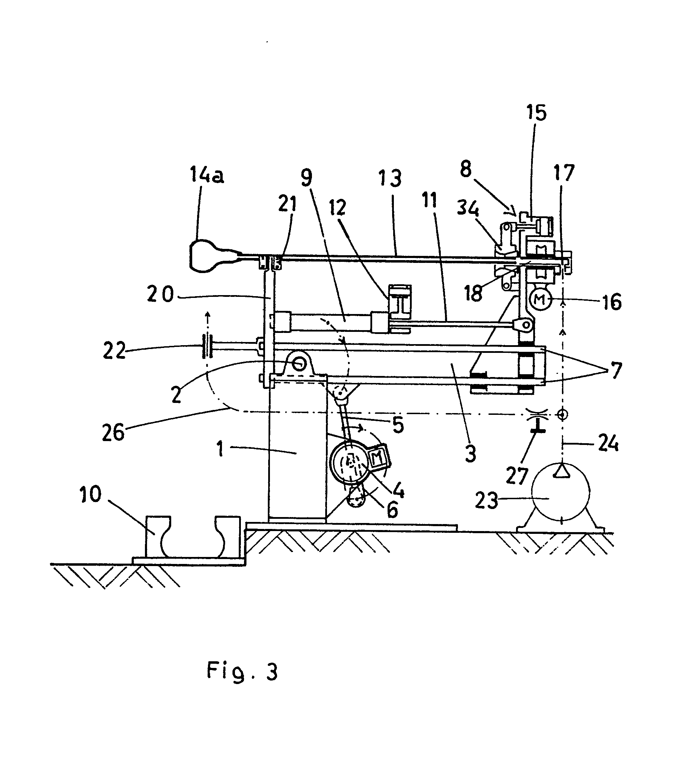

Die in der Zeichnung dargestellte Vorrichtung gemäss der Erfindung umfasst einen Ständer 1, welcher an seinem oberen Ende eine Kippachse 2 aufweist, um die eine Tragsäule 3 aus der in den Fig. 1 und 2 gezeigten, etwa vertikalen Blasposition in die aus Fig. 3 ersichtliche, etwa horizontale Kühlposition kippbar ist. Zum Kippen der Tragsäule 3 zwischen der Blasposition und der Kühlposition dient ein mittels eines Motors 4 angetriebener, ggf. eine Untersetzung aufweisender Exzentertrieb, der einen an der Tragsäule 3 angelenkten Hebel 5 aufweist, der mit einem von dem Motor 4 bewegten Exzenter 6 gelenkig verbunden ist. Neben der unteren Endstellung des Exzenters (Fig. 3) befindet sich die Tragsäule 3 in der Kipposition, während sie in der oberen Endstellung des Exzenters 6 (Fig. 1, 2) die etwa vertikale Blasposition einnimmt.

Entlang Führungen 7 der Tragsäule 3 ist ein insgesamt mit 8 bezeichneter Greiferkopf zwischen einer oberen Endstellung (Fig. 1) und einer unteren Sollstellung (Fig. 2) verschieblich. Zur Verschiebung des Greiferkopfes 8 dient ein Stellzylinder 9, wobei die untere Sollstellung des Greiferkopfes 8 in Abhängigkeit von der jeweils verwendeten Form 10 mittels einer auf die Kolbenstange 11 wirkenden, z.B. pneumatisch betätigten Bremse 12 einstellbar ist. Die Auslösung der Kolbenstangenbremse 12 erfolgt über in der Zeichnung nicht dargestellte, ein Ventil oder einen Endschalter betätigende, in Längsrichtung der Tragsäule 3 verstellbare Anschläge.

Der Greiferkopf 8 hat mehrere Aufgaben zu erfüllen. Er muss zum einen das hintere Ende der Pfeife 13, an der der eingestellte Glasposten 14 hängt, festhalten. Zu diesem Zweck ist eine Spannzange 34 vorgesehen, die z.B. über den Pneumatikzylinder 15 betätigt werden kann.

Weiterhin muss der Greiferkopf 8 so ausgebildet sein, dass die Pfeife 13 mit dem Glasposten 14 in Drehung versetzt werden kann. Hierzu ist ein besonderer Motor 16 am Greiferkopf vorgesehen. Schliesslich weist der Greiferkopf 8 auch einen Druckluftanschluss 17 auf, über welchen dem hinteren Ende der Pfeife 13 Druckluft zugeführt werden kann, wobei die Ausbildung des Greiferkopfes derart ist, dass eine ausreichend luftdichte Verbindung zwischen einem Mundstück 18 und dem hinteren Ende der Pfeife 13 entsteht, sobald dieses Pfeifenende mittels der Spannzange 34 im Greiferkopf 8 festgelegt ist.

Wie aus der Zeichnung hervorgeht, ist der Greiferkopf 8 vertikal über einer an sich bekannten Form 10 angeordnet, die, wie insbesondere aus Fig. 1 hervorgeht, in Richtung des Pfeiles 19 geöffnet bzw. geschlossen werden kann. Die Form ist üblicherweise eine normale Holzform, welche jeweils vor Einbringung des Hohlglasrohlings 14 mit Wasser befeuchtet wird.

Um eine genaue Ausrichtung der Glasmacherpfeife 13 bzw. des Hohlkörperrohlings 14 gegenüber der Form 10 zu erreichen, ist am unteren Ende der Tragsäule 3 ein Stützglied 20 angebracht, welches an seinem freien Ende 21 entsprechend einem Pfahleisen ausgebildet ist, so dass die Pfeife 13 sowohl um ihre Achse gedreht als auch in Längsrichtung verschoben werden kann.

Schliesslich kann der Zeichnung noch entnommen werden, dass mit der Tragsäule 3 wenigstens eine, im allgemeinen aber zwei Düsen 22 verbunden sind, die dazu dienen, Kühlluft gegen den am unteren Ende der Pfeife 13 befindlichen Glaskörper zu blasen. Die Kühlluftzufuhr ist dabei im wesentlichen nur in der Kühlposition gemäss Fig. 3 erforderlich. Allerdings wird bei der gezeigten Ausführungsform auch in der Position der Fig. 1 etwas Kühlluft gegen den Rohling 14 geblasen, was allerdings ohne grössere Bedeutung ist, da sich dieser Rohling nur sehr kurze Zeit in der Position der Fig. 1 befindet und bald in die Form 10 abgesenkt wird.

Sowohl für die Druckluftzufuhr zur Pfeife 13 bzw. ins Innere des Hohlglaskörpers 14 (vor dem Ausblasen) bzw. 14a (nach dem Ausblasen) als auch zur Erzeugung der für die Kühlung erforderlichen durch die Düsen 22 austretenden Luft dient eine gemeinsame Druckluftquelle 23, bei der es sich vorteilhafterweise um ein Gebläse handelt, welches einen Überdruck von maximal 1000 mm WS (9,8 kPa), im allgemeinen zwischen 500 und 1000 mm WS (4,9 und 9,8 kPa) erzeugt. Die Luftaustrittleitung 24 des Gebläses 23 ist verzweigt. Ein Teilluftstrom 25, der beim gezeigten Ausführungsbeispiel nicht drosselbar ist, führt zu dem Druckluftanschluss 17 des Greiferkopfes 8. Der andere Teilluftstrom 26, welcher über ein Ventil 27 drosselbar ist, führt zu den Kühlluftaustrittsdüsen 22.

Die Arbeitsweise mit der Vorrichtung nach der Erfindung ist wie folgt:

Es werden in üblicher Weise mittels der Pfeife 13 das Külbel bzw. der eingestellte Glasposten 14 hergestellt. Sobald der Glasposten 14 roh in eine für die gewünschte endgültige Gestaltung bzw. die Form 10 geeignete Gestalt gebracht ist, hängt der Glasmacher die Pfeife 13 mit dem Hohlkörperrohling 14 in einer Position entsprechend Fig. 1 in den Greiferkopf 8 ein. Durch Betätigung eines Ventils od. dgl. wird die Spannzange 34 betätigt, wodurch die Pfeife 13 festgehalten und gleichzeitig die Verbindung mit der Druckluftquelle 23 hergestellt wird. Ausserdem schaltet sich spätestens zu diesem Zeitpunkt der Motor 16 ein, welcher die Pfeife 13 in Drehung versetzt.

Sobald die Pfeife 13 in die Position gemäss Fig. 1 gebracht ist, wird über einen Steuerschalter, der vom Glasmacher ausgelöst werden kann, jedoch beispielsweise auch ein Zeitschalter sein könnte, der Greiferkopf 8 über den Stellzylinder 9 in die Position gemäss Fig. 2 abgesenkt, in der sich der Glasrohling 14 innerhalb der Form 10 befindet, die hierauf geschlossen wird. Während sich der Glasrohling 14 in der Form 10 befindet, dreht der Motor 16 die Pfeife 13 mit dem Rohling 14, sei es in einer Richtung, sei es intermittierend. Gleichzeitig wird über die Leitung 25, den Druckluftanschluss 17 und das Mundstück 18 Druckluft ins Innere des Hohlglaskörperrohlings 14 eingeführt, wodurch erreicht wird, dass dieser an die Aussenwand der Form angedrückt wird und seine endgültige Gestaltung 14a erhält.

Sobald ausreichende Zeit verstrichen ist, um zu gewährleisten, dass der Hohlglaskörper seine endgültige, von der Form 10 vorgegebene Gestalt hat, wird die Form 10 wieder geöffnet. Anschliessend kann dann über den Stellantrieb 9 der Greiferkopf 8 wieder in seiner oberen Position (entsprechend Fig. 1) angehoben werden.

Sobald der Greiferkopf 8 angehoben ist, wird mittels des Motors 4 und des Exzenterantriebes 5, 6 die Tragsäule 3 in die Kühlposition gemäss Fig. 3 gekippt. Zu diesem Zeitpunkt muss der Hohlglaskörper 14a bereits ausreichende Festigkeit besitzen, damit nicht durch weitere Druckluftzufuhr in die Pfeife 13 nach dem Entnehmen des Hohlglaskörpers 14a aus der Form 10 dieser noch eine Formänderung erfährt.

Sobald der Hohlglaskörper 14a die Form 10 nach oben verlassen hat, wird er über die Kühlluftdüsen 22 mit von der Druckluftquelle 23 kommenden Kühlluft beaufschlagt. Da die Kühlluftdüsen 22 mit der Tragsäule 3 mitschwenken, wird die Kühlluftzufuhr auch nicht unterbrochen.

In der Position der Fig. 3 wird der Hohlglaskörper 14a so lange bei eingeschaltetem Drehantrieb 16 für den Greiferkopf 8 und damit unter Rotation mit Kühlluft angeblasen, bis er vollständig erstarrt ist. Hierauf wird dann die Tragsäule 3 wieder in die etwa vertikale Position gemäss Fig. 1 verbracht, worauf der Greiferkopf stillgesetzt, die Spannzange 34 geöffnet und der Hohlglaskörper 14a nach Entnehmen der Pfeife 13 aus der Vorrichtung abgesprengt werden kann. Die Vorrichtung ist dann wieder zur Aufnahme einer neuen Pfeife 13 bereit.

Ein Vorzug bei Verwendung der Vorrichtung nach der Erfindung ist insbesondere, dass der Glasmacher, sobald er eine Pfeife in den Greiferkopf 8 eingehängt hat, Zeit hat, mittels einer weiteren Pfeife einen erneuten Glasposten einzustellen, wobei ggf. sogar eine zeitliche Anpassung zwischen der Arbeitsgeschwindigkeit der Vorrichtung und der des Glasmachers erfolgen kann.

Es leuchtet ein, dass die Vorrichtung nach der Erfindung sich vor allem wegen ihres einfachen Aufbaues leicht auf unterschiedliche Grössen und Gestaltungen der Hohlglaskörper einstellen lässt, wozu im allgemeinen nur eine unterschiedlich weite Absenkung des Greiferkopfes 8 bei Einführung des Rohlings 14 in die Form 10 erforderlich sein dürfte. Darüber hinaus kann ohne grössere Schwierigkeiten die Drehbewegung der Pfeife 13 durch entsprechende Programmierung des Antriebsmotors 16 in Anpassung an die jeweiligen Erfordernisse variiert werden. Beispielsweise kann die Drehrichtung vertauscht oder sogar eine hin- und hergehende Drehung eingestellt werden, wobei dann jeweils der Zeitpunkt der Drehrichtungsumkehr wählbar ist.

Mittels des Ventils 27 ist es möglich, den durch die Druckluftquelle 23 in dem Hohlkörperrohling 14 bzw. 14a erzeugten Überdruck einzustellen. Wenn das Ventil 27 geschlossen ist, ergibt sich ein verhältnismässig hoher Druck. Bei weit geöffnetem Ventil wird dagegen der Druck niedriger. Selbstverständlich wäre es auch denkbar, das Ventil 27 in die Leitung 25 zu dem Greiferkopf 8 einzubauen, nicht in die Leitung 26 zu den Düsen 22. Auch wäre eine Anordnung denkbar, bei der sowohl in der Leitung 25 als auch in der Leitung 26 je ein Ventil vorhanden ist.

## Patentansprüche

1. Vorrichtung zum Ausblasen eines am vorderen Ende einer Glasmacherpfeife (13) hängenden Hohlglaskörperrohlings (14) in einer Form (10), wobei das hintere Ende der Pfeife (13) von einem oberhalb der Form (10) an einer vertikalen Tragsäule (3) angeordneten Greiferkopf (8) erfasst wird, welcher die Pfeife (13) mit einer Druckluftquelle (23) verbindet und um die vertikale Achse der Pfeife (13) rotierbar ist, dadurch gekennzeichnet, dass der Greiferkopf (8) zur Einführung des eingestellten Glaspostens (14) vertikal in die Form (10) absenkbar ist, und dass die Tragsäule (3) gemeinsam mit dem Greiferkopf (8) und der in diesem hängenden Pfeife (13) aus der etwa vertikalen Blasposition (Fig. 1, 2) in eine etwa horizontale Kühlposition (Fig. 3) kippbar ist.

2. Vorrichtung nach Anspruch 1, dadurch gekennzeichnet, dass der Greiferkopf (8) eine Spannzange (34) für das hintere Ende der Pfeife (13) aufweist, welche gleichzeitig die Verbindung mit der Druckluftquelle (23) sichert.

3. Vorrichtung nach einem der Ansprüche 1 oder 2, dadurch gekennzeichnet, dass der Greiferkopf (8) einen eigenen Drehantrieb (16) aufweist.

4. Vorrichtung nach einem der vorhergehenden Ansprüche, dadurch gekennzeichnet, dass der Greiferkopf (8) in Längsrichtung der Tragsäule (3) verschieblich ist.

5. Vorrichtung nach Anspruch 4, dadurch gekennzeichnet, dass zur Verschiebung des Greiferkopfes (8) ein Stellzylinder (9) dient, dessen Kolbenstange (11) in der unteren Sollstellung (Fig. 2) des Greiferkopfes (8), in der sich der eingestellte Glasposten (14) in der Form (10) befindet, mittels einer über verstellbare Anschläge an der Tragsäule (3) angesteuerten Bremse (12) arretierbar ist.

6. Vorrichtung nach einem der vorhergehenden Ansprüche, dadurch gekennzeichnet, dass die Tragsäule (3) unterhalb des Greiferkopfes (8) und im Bereich des unteren Drittels der eingehängten Pfeife (13) ein eine Längsverschiebung und Drehung der Pfeife ermöglichendes, diese bei horizontaler Tragsäule (Fig. 3) lagerndes Stützglied (20, 21) angeordnet ist.

7. Vorrichtung nach einem der vorhergehenden Ansprüche, dadurch gekennzeichnet, dass die Tragsäule (3) oberhalb der Form (10) um eine Horizontalachse (2) mittels eines Stellmotors (4) kippbar gelagert ist.

8. Vorrichtung nach einem der vorhergehenden Ansprüche, dadurch gekennzeichnet, dass in Blasposition oberhalb der Form (10) eine zusammen mit der Tragsäule (3) schwenkbare Kühleinrichtung (22) für den entformten Hohlglaskörper (14a) vorgesehen ist.

9. Vorrichtung nach Anspruch 8, dadurch gekennzeichnet, dass die Kühleinrichtung (22) von der zum Ausblasen des Hohlglaskörpers (14) dienenden Druckluftquelle (23) mit gespeist ist.

10. Vorrichtung nach Anspruch 9, dadurch gekennzeichnet, dass als Druckluftquelle (23) ein Gebläse mit einem Überdruck von maximal 1000 mm WS (9,8 kPa) dient, von dessen Austrittsluftstrom (24) ein erster Teilluftstrom (25) der Pfeife (13) und ein zweiter Teilluftstrom (26) der Kühleinrichtung (22) zugeführt wird, und dass einer der Teilluftströme (25, 26) mittels eines Ventils (27) od. dgl. drosselbar ist.

11. Vorrichtung nach Anspruch 10, dadurch gekennzeichnet, dass das Ventil (27) od. dgl. in der zur Kühleinrichtung (22) führenden Leitung (26) angeordnet ist.

## Revendications

1. Appareil pour réaliser dans un moule (10) le soufflage d'un corps creux en verre, à partir d'une ébauche (14) suspendue à l'extrémité antérieure d'une canne de soufflage (13); l'extrémité postérieure de la canne de soufflage (13) étant maintenue, à l'aplomb du moule (10), par une tête de préhension (8) montée sur une colonne porteuse verticale (3); la tête de préhension (8) assurant la mise en communication de la canne de soufflage (13) avec une source d'air comprimé, et pouvant être animée d'un mouvement de rotation suivant l'axe vertical de la canne de soufflage; l'appareil étant caractérisé en ce qu'on peut communiquer un mouvement de descente à la tête de préhension (8), pour introduire à la verticale dans le moule (10) l'ébauche en verre (14), prête à mouler; et en ce que la colonne porteuse (3), avec la tête de préhension (8) et la canne de soufflage (13) suspendue dans la tête, peut basculer, à partir d'une position de soufflage sensiblement verticale (fig. 1, 2) pour venir dans une position de refroidissement, sensiblement à l'horizontale (fig. 3).

2. Appareil selon la revendication 1, caractérisé en ce que la tête de préhension (8) comporte une pince de serrage (34), pour prendre l'extrémité postérieure de la canne de soufflage (13), cette pince de serrage assurant en même temps la liaison avec la source d'air comprimé (23).

3. Appareil selon l'une des revendications 1 ou 2, caractérisé en ce que la tête de préhension (8) comporte un système particulier d'entraînement en rotation (16).

4. Appareil selon l'une des revendication 1 à 3, caractérisé en ce que la tête de préhension (8) peut coulisser dans le sens de la longueur de la colonne porteuse (3).

5. Appareil selon la revendication 4, caractérisé en ce qu'il comporte un vérin de manœuvre (9), pour commander le coulissement de la tête de préhension (8); la tige de piston (11) de ce vérin pouvant être bloquée, au moyen d'un frein (12) solidaire de la colonne porteuse (3) et asservi à des butées réglables; pour arrêter le mouvement de la tête de préhension (8) à hauteur d'une position inférieure de consigne, dans laquelle l'ébauche en verre (14) prête à être moulée, se trouve enfoncée dans le moule (10).

6. Appareil selon l'une des revendications 1 à 5, caractérisé en ce que la colonne porteuse (3) est pourvue d'un organe de soutien (20, 21), disposé en dessous de la tête de préhension (8), et au voisinage du tiers inférieur de la canne de soufflage (13) suspendue à la tête; cet organe de soutien (20, 21) permettant le coulissement axial et la rotation de la canne de soufflage (13), et soutenant celle-ci, à la manière d'un palier, en position horizontale de la colonne porteuse (fig. 3).

7. Appareil selon l'une des revendications 1 à 6, caractérisé en ce que la colonne porteuse (3) est montée à bascule au-dessus du moule (10) sur un axe horizontal (2), et peut basculer sous l'action d'un moteur de manœuvre (4).

8. Appareil selon l'une des revendications 1 à 7, caractérisé en ce qu'il comporte un système de refroidissement (22), pour refroidir le corps creux en verre (14a) après son démoulage; ce système de refroidissement (22) étant disposé au-dessus du moule (10) en position de soufflage de la colonne porteuse (3), et accompagnant la colonne dans son mouvement de basculement.

9. Appareil selon la revendication 8, caractérisé en ce que le système de refroidissement (22) est alimenté par la source d'air comprimé (23) qui sert au soufflage du corps creux en verre (14).

10. Appareil selon la revendication 9, caractérisé en ce que la source d'air comprimé est constituée par un groupe de soufflage, ayant une pression de refoulement maximale de 1000 mm d'eau (9,8 kPa); la canalisation de refoulement (24) du groupe de soufflage se divisant en deux branches (25, 26), dont une première branche (25) alimente la canne de soufflage (13), la seconde branche (26) alimentant le système de refroidissement (22); l'une de ces deux branches (25, 26) de distribution d'air comprimé étant pourvue d'un organe d'étranglement tel qu'un robinet (27).

11. Appareil selon la revendication 10, caractérisé en ce que l'organe d'étranglement tel qu'un robinet (27) est monté sur la canalisation d'air comprimé (26) qui alimente le système de refroidissement (22).

## Claims

1. Apparatus for the final blowing of a hollow glass body blank (14) in a mould (10) and hanging at the front end of a blowpipe (13), the back end of the pipe (13) being held by a gripper head (8) arranged above the mould (10) on a vertical support column (3), which gripper head connects the pipe (13) to a compressed air source (23) and is rotatable at the vertical axis of the pipe (13), characterised in that the gripper head (8) can be lowered to introduce the prepared gather (14) vertically into the mould (10) and in that the support column (3) together with the gripper head (8) and the pipe (13) hanging in the latter can be swung from the approximately vertical blowing position (Fig. 1, 2) into an approximately horizontal cooling position (Fig. 3).

2. Apparatus according to Claim 1, characterised in that the gripper head (8) has a holding clamp (34) for the back end of the pipe (13), which clamp simultaneously provides the connection to the compressed air source (23).

3. Apparatus according to Claim 1 or 2, characterised in that the gripper head (8) has its own rotational drive (16).

4. Apparatus according to one of the preceding claims, characterised in that the gripper head (8) is displaceable in the longitudinal direction of the support column (3).

5. Apparatus according to Claim 4, characterised in that, for displacement of the gripper head (8), an adjusting cylinder (9) is used, the piston rod (11) of which can be locked by means of a brake (12), which is controlled *via* adjustable stops on the support column (3), in the lower set position (Fig. 2) of the gripper head (8), in which the prepared gather (14) is located in the mould (10).

6. Apparatus according to one of the preceding claims, characterised in that the support column (3) has an associated supporting element (20, 21) beneath the gripper head (8) and in the region of the lower third of the suspended pipe (13), which enables the pipe to be displaced longitudinally and rotated and bears it when the support column is horizontal (Fig. 3).

7. Apparatus according to one of the preceding claims, characterised in that the support column (3) is mounted above the mould (10) so that it can be swung about a horizontal axis (2) by means of a servomotor (4).

8. Apparatus according to one of the preceding claims, characterised in that, above the mould (10) in the blowing position, there is provided a cooling device (22) for the demoulded hollow glass body (14a), which device can be swung with the support column (3).

9. Apparatus according to Claim 8, characterised in that the cooling device (22) is also supplied from the compressed air source (23) used for the final blowing of the hollow glass body (14).

10. Apparatus according to Claim 9, characterised in that the compressed air source (23) is a blower having an overpressure of maximum 1000 mm WC (9.8 kPa), from the discharge air stream (24) of which a first partial air stream (23) is fed to the pipe (13) and a second partial air stream (26) is fed to the cooling device (22), and in that one of the partial air streams (25, 26) can be throttled by means of a valve (27) or the like.

11. Apparatus according to Claim 10, characterised in that the valve (27) or the like is arranged in the line (26) leading to the cooling device (22).

0 066 671

Fig. 1

Fig. 2

9

Fig. 3